# FASCICULE DE BREVET EUROPEEN

(11) **EP 0 506 554 B1**
(45) Date de publication et mention de la délivrance du brevet: **06.03.1996**
(21) Numéro de dépôt: 92400805.5
(22) Date de dépôt: 25.03.1992
(51) Int. Cl.: G01L 9/00

(54) **Capteur de pression résonant**
Resonanzdruckfühler
Resonant pressure sensor

(30) Priorité: 27.03.1991 FR 9103708
(43) Date de publication de la demande: 30.09.1992
(73) Titulaire: COMMISSARIAT A L'ENERGIE ATOMIQUE, F-75015 Paris (FR)
(72) Inventeur: Dufour, Michel, F-38000 Grenoble (FR)
(74) Mandataire: Poulin, Gérard

(56) Documents cités:
- GB-A- 2 215 053
- US-A- 4 382 385

## Description

La présente invention se rapporte à un capteur de pression résonant et notamment à un tel capteur de petite taille (quelques millimètres de côte par exemple) realisé par les technologies de la microélectronique, dont en particulier le micro-usinage.

Des capteurs de pression résonant sont parfaitement connus de l'homme de métier et l'on commençera d'abord par en rappeler le principe physique général de fonctionnement.

De tels capteurs comportent en général une membrane souple et déformable soumise à l'ambiance où règne la pression à mesurer et qui transmet, par l'intermédiaire d'un système convertisseur, la force qu'elle supporte du fait de cette pression à un système résonateur, par ailleurs mis en vibration par un excitateur et dont on mesure en permanence la fréquence de résonance. Comme cette fréquence de résonance est fonction de l'effort transmis au système résonateur, on voit clairement qu'en mesurant cette frequence, on obtient une grandeur analogique représentative de la pression à mesurer.

Les systèmes utilisés pour exciter le résonateur et mesurer la frequence de résonance appartiennent à de nombreux types connus et mettent en oeuvre des principes physiques egalement connus. On peut citer par exemple l'utilisation de jauges élastorésistives inséerées dans un pont de Wheatstone et fixées à la surface du corps vibrant constituant le résonateur, l'emploi de matériaux piézo-electriques tels que l'oxyde de zinc ZnO, l'emploi de forces électro-statiques entre deux armatures d'un condensateur dont l'un est gravé sur le résonateur ou constitue par le résonateur lui-même etc...

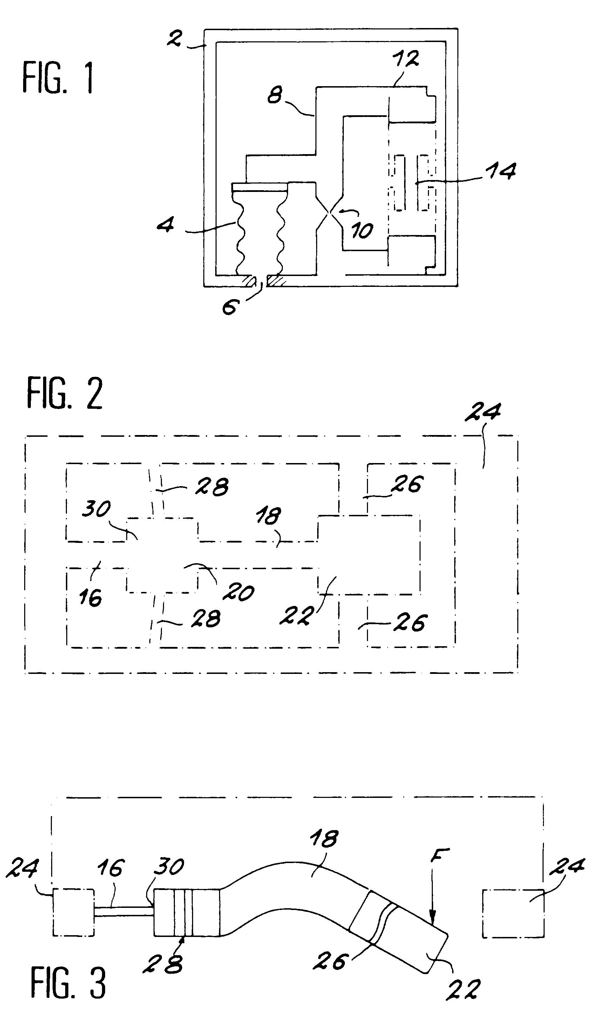

En se référant à la figure 1 ci-jointe, on va décrire un exemple schématique de capteur de pression à conversion par quartz oscillant appartenant aux techniques de l'art antérieur. Sur cette figure 1, on a représenté dans un boîtier 2 dans lequel règne le vide, un système comprenant un soufflet 4 mis en communication par une ouverture 6 de la paroi du boîtier 2 avec l'atmosphère dont on veut mesurer la pression. Ce soufflet 4 qui se dilate plus ou moins en longueur selon cette même pression agit d'abord sur un convertisseur 8 qui est une pièce en forme de levier, articulée autour d'un pivot 10. L'extrémité 12 de ce convertisseur 10 transmet l'action mécanique subie par le soufflet 4 sur un quartz oscillant 14 dont on mesure la frequence de résonance. Cette fréquence de résonance est une valeur analogique de la pression que l'on veut mesurer.

Toutefois, les dispositifs de ce genre de l'art connu ont un certain nombre de défauts spécifiques tant du point de vue technique que du point de vue économique. On peut les répertorier de la façon suivante :

En ce qui concerne d'abord le coût de fabrication de l'appareil, celui-ci est relativement élevé du fait que les fabrications en série sont difficiles et que les appareils doivent être en général fabriqués un par un.

De plus, les procédés de fabrication actuellement envisageables ne permettent pas de réduire la taille des capteurs en-dessous d'une certaine dimension (de l'ordre de 1 ou plusieurs cm par exemple) alors que des applications de plus en plus nombreuses nécessitent des capteurs de petite taille (dont les trois dimensions sont par exemple de l'ordre de quelques millimètres).

De plus, les matériaux utilisés pour construire de tels capteurs relèvent de compétences techniques dispersées, alors que la microélectronique est un art "monolithique", à la portée d'un homme de métier unique.

En ce qui concerne enfin leurs performances techniques, les capteurs de pression résonants connus à ce jour, ne tolèrent en général que des écarts de fréquence de 5 à 10% de la fréquence de résonance du résonateur qui peut par exemple se situer entre 95 à 105 kHz. Cette particularité, qui est liée aux contraintes de rupture du résonateur, limite de façon importante la gamme des mesures accessibles pour ces mêmes capteurs.

On connaît également, par le document US-A-4 382 385, un capteur de pression différentiel comportant un boîtier renfermant un résonateur et un système convertisseur composé d'un tube solidaire d'un bras pivotant autour d'un pivot fixé au boîtier. Le bras est rendu solidaire d'une membrane déformable et l'intérieur du boîtier est isolé de l'extérieur par des soufflets entourant le tube du convertisseur.

La présente invention a précisément pour objet un capteur de pression résonant qui résoud d'une façon simple les défauts de l'art antérieur tels qu'ils viennent d'être rappelés, tout en permettant une fabrication en série des capteurs sous une forme miniaturisée.

Ce capteur de pression résonant comportant un boîtier renfermant un convertisseur et un résonateur mis en vibration par un excitateur et dont la fréquence de résonance que l'on mesure est fonction de l'intensité de la force correspondant à la pression à déterminer, le boîtier maintenant l'ensemble des composants du convertisseur et du résonateur, le convertisseur comportant des moyens souples et fléchissants aptes à absorber des moments de flexion de façon à transmettre au résonateur une force de traction ou de compression exempte de moment de flexion générateur de contraintes localisées à l'entrée du résonateur, se caractérise en ce que le boîtier est fermé par une membrane déformable soumise à l'ambiance où règne la pression à mesurer, le convertisseur étant relié mécaniquement à la membrane pour transmettre la force ainsi supportée par cette membrane au résonateur, le boîtier comportant un cadre rigide pour maintenir l'ensemble des composants du convertisseur et du résonateur.

Le capteur de pression selon l'invention, permet de réduire au strict minimum, voir de supprimer complètement l'apparition à l'entrée du résonateur de contraintes localisées dangereuses ou néfastes pour le bon fonctionnement de celui-ci et qui se développaient dans les capteurs de l'art antérieur parce qu'on ne prévoyait pas de moyens spéciaux dans le convertisseur pour en empêcher la formation. En effet, le système de forces appliquées par la membrane est transmise par le système convertisseur au résonateur n'est pas un système de forces pures et comporte des couples qui proviennent du changement de direction de la force appliquée sur la membrane au cours de sa transmission par le convertisseur.

Selon une caractéristique importante de la présente invention, le capteur de pression se caractérisé en ce que l'ensemble du convertisseur et du résonateur est monté dans un cadre rigide rectangulaire comportant selon son axe longitudinal :
- un pivot monté rotatif autour de deux charnières le reliant aux parois latérales du cadre et dont la direction générale est perpendiculaire à l'axe longitudinal du cadre ;
- un talon lié aux parois du cadre par l'intermédiaire de deux ou plusieurs ailettes en forme de lames dont le plan est sensiblement perpendiculaire au plan du cadre ;
- une poutre souple et fléchissante reliant le talon et le pivot ;
- une poutre servant de résonateur, reliant le côte du talon opposé à la poutre souple et fléchissante à un des côtés du cadre rigide perpendiculaire à l'axe longitudinal du cadre, et en ce que le cadre rigide est monté dans le plan médian d'un boîtier parallélépipédique dont une au moins des faces parallèles au plan du cadre est constituée d'une membrane déformable sous l'effet de la pression qu'elle subit, les déformations de cette membrane étant transmisess au pivot par un ergotsolidaire de la membrane et reliant mécaniquement cette membrane et ce pivot.

Grâce à l'ensemble des composants du convertisseur et du résonateur maintenus par le cadre rigide, et au fait que la répartition et la dimension réciproque des différentes pièces le composant sont calculées par ordinateur en vue du résultat recherché, cette structure permet, lorsqu'elle est correctement optimisée, de ne transmettre à l'entrée de la poutre constituant le résonateur pratiquement que des tractions ou des compressions pures, à l'exclusion de tout moment fléchissant. Ceci permet, en supprimant les risques de destruction du résonateur, d'utiliser notamment une gamme de fréquences de résonance beaucoup plus élevée dont les écarts sont de l'ordre de 100% autour de la fréquence de résonance centrale. Un tel appareil peut par exemple fonctionner parfaitement avec des fréquences de résonance qui s'échelonnent entre 50 et 150 kHz, ce qui donne par exemple un domaine de performances du capteur pouvant se situer entre 0 et 50 ou 0 et 1 bar avec une précision de 10⁻⁴.

Le capteur de pression résonant objet de l'invention présente des avantages complémentaires des précédents lorsqu'il est de surcroît miniaturise et réalisé à l'aide des techniques de micro-électronique ou du micro-usinage.

Dans ce cas en effet, toutes les pièces le constituant sont réalisées, pour le boîtier d'une part et pour le cadre de l'autre, dans un substrat monobloc de silicium ou de quartz, ce qui leur confère une structure cristalline garante de la valeur pratique de la limite à la rupture du matériau en fonctionnement, contrairement à ce qui se passe pour les fabrications macroscopiques dans lesquelles le procédé de fabrication peut altérer les matériaux constitutifs qui n'ont peut être pas intrinsèquement ou par effet de juxtaposition des qualités mécaniques aussi bonnes que celles du quartz ou du silicium monocristallins. Indépendamment de la miniaturisation qui permet une ouverture de la gamme d'applications du capteur, l'emploi du quartz pour réaliser l'appareil permet par exemple une excitation-détection facile du résonateur à l'aide d'un détecteur du type piézo-électrique ainsi que la réalisation des conduits électriques de sortie reliant nécessairement le résonateur à l'extérieur par implantation ionique de titane dans le quartz. Si l'appareil, et par conséquent le résonateur sont en silicium, l'excitation et la détection peuvent intervenir à l'aide d'une simple jonction p - n gravée dans le silicium et la liaison électro-statique associée.

En ce qui concerne le fonctionnement de l'ensemble talon-résonateur-ailettes, on précisera utilement que la raideur selon l'axe du résonateur de l'ensemble talon-ailettes-résonateur est impose par le résonateur lui-même alors que l'ensemble talon-ailettes a seul la charge de compenser un moment de flexion résiduel à l'entrée du résonateur. C'est la raison d'être de la forme des ailettes de jonction du talon au cadre rigide lesquelles sont constituées par exemple de lames verticales perpendiculaires au plan du cadre rigide empêchant pratiquement toute rotation du talon selon un axe perpendiculaire à l'axe longitudinal du cadre rigide.

Selon l'invention, pour fabriquer un capteur de pression résonant tel que précédemment défini à l'aide des procédés de la micro-électronique de micro-usinage, on s'y prend comme suit. Le boîtier comportant la membrane et le cadre rigide sont fabriques séparément en un même matériau que l'on choisit parmi le quartz et le silicium à partir d'un substrat monobloc de ce matériau que l'on grave à la forme désirée à l'aide des procédés connus de micro-usinage. Les parties ainsi fabriquées séparément sont ensuite assemblées pour former le capteur complet.

De toute façon l'invention sera mieux comprise en se référant aux figures 2 à 7 ci-jointes qui décrivent un exemple de mise en oeuvre du capteur de pression résonant, objet de l'invention, description qui sera faite surtout à titre indicatif et non limitatif. En particulier, l'exemple qui va être décrit maintenant est relatif à un mini-capteur de quelques millimètres de dimensions et realise par micro-usinage. Il doit être bien entendu que cet exemple est donné comme étant illustratif de l'une des applications les plus intéressantes de l'invention mais que l'on doit considérer que des capteurs de dimensions plus importantes et non fabriques par micro-usinage peuvent également être réalisés tout en étant compris dans le cadre de la présente invention. Les figures 2 à 7 représentent :
- la figure 2, une vue de dessus du cadre rigide comportant le pivot, la poutre fléchissante, le talon et le résonateur ;
- la figure 3, une vue en coupe selon AA′ de la figure 2 du cadre précédant ;
- la figure 4, représenté une vue en coupe-élevation d'un capteur complet avec son boîtier et son convertisseur ;
- la figure 5 montre la déformation du capteur de la figure 4 sous l'effet d'une pression P1, appliquée à la membrane supérieure ;
- la figure 6 montre une variante de réalisation du capteur des figures 4 et 5 dans lequel les deux faces opposées, supérieure et inférieure, du capteur sont constituées de membranes soumises respectivement pour l'une à la pression P1 et pour l'autre à la pression P2.

Sur la figure 2, on a représenté la pièce essentielle du capteur résonant, objet de l'invention qui comporte le résonateur 16, la poutre fléchissante 18, ainsi que le talon 20 et le pivot 22 situés conformément à l'invention à l'intérieur du cadre rigide 24. L'ensemble représenté a quelques millimètres de côté et est obtenu par gravure d'un substrat de silicium ou de quartz. Selon l'invention, le pivot 22 est relie au cadre rigide 24 par des charnières 26 et le talon 20 est relie à ce même cadre rigide 24 par un système d'ailettes 28 (au nombre de deux dans l'exemple représente) qui sont constituées de lames minces perpendiculaires au plan de la fig. 2. La poutre fléchissante et souple 18 relie directement le pivot 22 au talon 20. Dans d'autres réalisations, la liaison entre le talon 20 et le cadre 24 peut être réalisée par un ensemble de poutres produisant le même effet de compensation d'un moment de flexion résiduel à l'entrée du résonateur.

Si l'on se réfère maintenant à la vue en coupe de la figure 3 où l'on reconnaît les éléments précédents portant les mêmes nombres de références, on voit que l'extrémité du pivot 22 est le lieu d'application de la pression marquée par la flèche F et que c'est cette pression qui déforme l'ensemble de la poutre fléchissante 18, laquelle acquiert, comme on le voit sur cette figure 3, un profil en forme de dôme. Le talon 20 est conçu de manière à permettre, en liaison avec le système d'ailettes 28, la compensation de toute flexion résiduelle qui pourrait subsister encore à l'entrée 30 du résonateur. Conformément à l'invention, l'ensemble du pivot 22 de la poutre fléchissante 18 et du talon 20 transmet l'effort F sur le système convertisseur (22, 18, 20) en absorbant les moments de flexion de façon à ne transmettre sur le résonateur 16 compose d'une poutre plane qu'un effort de traction ou de compression simple. Dans le mode de mise en oeuvre des figures 2 et 3, la poutre réfléchissante 18 est une poutre unique dont le profil est optimisé par ordinateur en fonction des impératifs précédents. Le résonateur 16 est également une poutre simple, mais pourrait aussi bien dans certains cas revêtir la structure d'un "diapason" à plusieurs branches. Il est clair que la frequence de résonance utilisée pour mesurer la pression peut être l'un quelconque des modes de vibration de ce résonateur 16, bien que tous ne soient pas adaptés de façon égale à la solution du problème recherché. De même, le plan de vibration du résonateur n'est pas imposé par principe mais plutôt par des considérations technologiques : il pourrait par exemple être perpendiculaire au plan du substrat dans lequel il est usiné ou parallèle à ce plan, comme c'est le cas par exemple d'un résonateur realise selon la technologie quartz.

L'excitation du résonateur 16 se fait par création d'une petite excitation mécanique à sa surface à l'aide de moyens connus et non représentés ici. Si cette excitation comprend une composante (au sens de l'analyse de Fourier) dont la fréquence coïncide avec la fréquence de résonance, cette composante, même très faible est généralement suffisante pour amorcer une vibration d'amplitude élevée. La détection de la fréquence de résonance peut se faire par exemple à l'aide d'un dispositif détecteur de déformations ; dans certains cas également, la résonance se répercute sur le dispositif excitateur et peut être décelé et mesuré par celui-ci. Lorsque le cadre rigide 24 est réalisé en silicium, il est commode d'utiliser une excitation de type électrostatique avec par exemple un condensateur réalisé à la surface du résonateur 16 constituant une électrode et une seconde électrode surmontant une zone diélectrique en nitrure de silicium Si₃F₄. La détection peut alors être faite simplement à l'aide d'un pont de Wheatstone formé de jauges piézo-résistives. Dans le cas particulier où le cadre rigide 24 est réalisé en quartz, il y a tout intérêt à utiliser la propriété piézo-électrique de ce matériau, ce qui permet alors de confondre la fonction d'excitation et la fonction de détection, puisque une simple variation de la capacité fournissant l'excitation électrique est l'indice que le système fonctionne à la résonance.

La fonction du système convertisseur (18, 20, 22) est de concentrer les efforts de flexion dans les pièces intermédiaires (pivot 22 et poutre fléchissante 18) de façon à exercer exclusivement un effort net de traction (ou de compression) sur le talon 20. Ce talon 20 doit donc exercer un couple de rappel suffisamment élevé pour compenser, à leur point de jonction, le couple dû à la poutre flechissante 18. En revanche, il doit opposer à une traction (ou compression) dirigée selon l'axe principal du résonateur 16, une résistance propre la plus faible possible. Ainsi l'effort statique en traction (ou compression) appliqué sur l'ensemble talon-résonateur est transmis intégralement sur le résonateur. Cette dernière particularité du fonctionnement du capteur est réalisée en partie grâce au système d'ailettes 28 qui autorise un déplacement longitudinal du talon 20 et freine au contraire considérablement toute tentative de rotation de ce dernier.

Pour résumer, le système convertisseur 30 est conçu de façon à ce que le moment total des efforts, calculé à l'encastrement 30 du résonateur dans le talon, soit nul sans que soit nul l'effort résultant dirigé selon l'axe du résonateur 16.

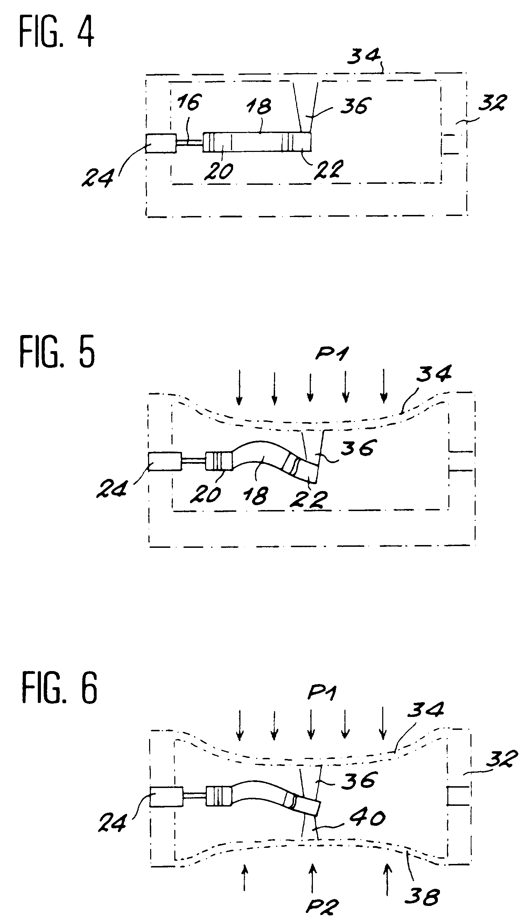

En se référant maintenant à la figure 4, on retrouve l'ensemble convertisseur 18, 20, 22, le résonateur 16, montés ensemble dans un boîtier parallélépipédique 32, dont la surface supérieure est amincie pour former la membrane souple 34 soumise à la pression à mesurer. Comme le convertisseur 18, 20, 22 et le résonateur 16, le boîtier 32 et la membrane 34 sont obtenus par gravure d'un substrat dans un même matériau. La figure 4 permet de voir l'ergot 36 fixe à la membrane souple 34 qui assure un lien mécanique entre cette membrane 34 et le pivot 22 du convertisseur.

Sur la figure 5 on a représenté la déformation de la structure de la figure 4 sous l'effet d'une pression P1 appliquée à la partie supérieure de la membrane 34. On voit que l'ensemble convertisseur 18, 20, 22 sous l'effet de l'effort exercé par l'ergot 36 sur le pivot 26 se déforme pour adopter un profil en dôme identique à celui qui a été représenté sur la figure 3.

Dans le cas de la figure 6, le capteur résonant est du type différentiel, c'est-à-dire que le boîtier 32 a ses deux faces supérieure et inférieure constituées d'une membrane souple, respectivement 34 et 38, l'ensemble des déformations des membranes 34 et 38 sous l'influence des pressions P1 et P2 appliquées de l'extérieur transmettant, à l'ensemble convertisseur par les ergots 36 et 40 une déformation résultante.

Dans l'exemple décrit les membranes souples 34 et 38 ont une superficie de quelques millimètres carres et une épaisseur de quelques micromètres ou dizaines de micromètres. S'il est nécessaire de modifier la raideur des membranes, on peut adapter leur forme en conséquence. En particulier, une ou plusieurs variations locales d'épaisseur peuvent permettre d'obtenir des membranes qui, tout en conservant une épaisseur moyenne assez élevée ont néanmoins une raideur très faible.

Dans la plupart des réalisations de capteur, objet de l'invention, l'intérieur du boîtier 32 est conçu de façon étanche et mis sous vide, ce qui facilite considérablement la vibration du résonateur.

Bien entendu, des liaisons électriques entre l'intérieur et l'extérieur du boîtier 32 doivent être prévues pour faire passer l'énergie électrique d'excitation du résonateur 16 et pour mesurer en retour sa fréquence de vibration. Ces moyens ne sont pas représentés sur les figures précédentes car ils sont connus de l'homme de métier. On peut indiquer, quand il s'agit d'une technique de réalisation de l'appareil en quartz, que ces liaisons electriques peuvent être obtenues facilement par implantation de titane dans la paroi même de l'élément 24 du boîtier.

Le procédé de préparation de la structure précédente d'un capteur de pression résonant miniaturisé peut consister à préparer séparément le cadre rigide 24 supportant le convertisseur et le résonateur ainsi que le boîtier 32 avec au moins l'une de ses faces constituant la membrane souple. Chacune de ces deux pièces est réalisée séparément par gravure d'un substrat de silicium ou de quartz, ce qui conduit à des systèmes monobloc particulièrement solides. Les deux pièces sont ensuite assemblées et montées l'une dans l'autre pour obtenir le capteur complet des figures 4 à 6.

## Revendications

1. Capteur de pression résonant comportant un boîtier (32) renfermant un convertisseur et un résonateur (16) mis en vibration par un excitateur et dont la fréquence de résonance que l'on mesure est fonction de l'intensité de la force correspondant à la pression à déterminer, le boîtier maintenant l'ensemble des composants du convertisseur et du résonateur, le convertisseur comportant des moyens souples et fléchissants (18) aptes à absorber des moments de flexion de façon à transmettre au résonateur une force de traction ou de compression exempte de moment de flexion générateur de contraintes localisées à l'entrée du résonateur, caractérisé en ce que le boîtier (32) est fermé par une membrane déformable (34) soumise à l'ambiance où règne la pression à mesurer, le convertisseur (18, 20, 22) étant relié mécaniquement à la membrane pour transmettre la force ainsi supportée par cette membrane (34) au résonateur (16), le boîtier comportant un cadre rigide pour maintenir l'ensemble des composants du convertisseur et du résonateur.

2. Capteur de pression résonant selon la revendication 1, caractérisé en ce que le cadre rigide (24) est rectangulaire et supporte, selon son axe longitudinal, les éléments suivants constituant le convertisseur :
- un pivot (22) monté rotatif autour de deux charnières (26) le reliant aux parois latérales du cadre (24) et dont la direction générale est perpendiculaire à l'axe longitudinal du cadre ;
- un talon (20) lié aux parois du cadre par l'intermédiaire d'un système d'ailettes (28) dont le plan est sensiblement perpendiculaire au plan du cadre ;
- une poutre souple et fléchissante (18) reliant le talon (20) et le pivot (22) ;
- une poutre (16) servant de résonateur, reliant le côté du talon (20) opposé à la poutre souple et fléchissante (18) à un des côtés du cadre rigide (24) perpendiculaire à l'axe longitudinal du cadre, et en ce que le cadre rigide (24) est monté dans le plan médian du boîtier (32) qui est parallélépipédique et dont une au moins des faces parallèles au plan du cadre est constituée par la membrane déformable (34) sous l'effet de la pression qu'elle subit, les déformations de cette membrane (34) étant transmises au pivot par un ergot solidaire de la membrane (34) et reliant mécaniquement cette membrane et ce pivot (22).

3. Procédé de fabrication d'un capteur de pression selon l'une quelconque des revendications 1 et 2 précédentes sous forme miniaturisée, caractérisé en ce que le boîtier comportant la membrane et le cadre rigide sont fabriqués séparément en un même matériau choisi parmi le quartz et le silicium à partir d'un substrat monobloc de ce matériau gravé à l'aide des procédés de micro-usinage, puis assemblés ensuite.

## Patentansprüche

1. Resonanzdruckfühler, umfassend ein Gehäuse (32), einen Wandler und einen Resonator (16) umschließend, in Schwingung versetzt durch einen Erreger und dessen Resonanzfrequenz, die man mißt, abhängig ist von der Intensität der Kraft, die dem zu bestimmenden Druck entspricht, wobei das Gehäuse die Gesamtheit der Bauteile des Wandlers und des Resonators festhält, der Wandler nachgiebige und biegsame Einrichtungen (18) umfaßt, geeignet zum Absorbieren von Biegemomenten, derart, daß sie an den Resonator eine Zug- oder eine Druckkraft übertragen, befreit von dem am Eingang des Resonators lokalisierte Spannungen erzeugenden Biegemoments,
**dadurch gekennzeichnet**,
daß das Gehäuse (32) verschlossen ist durch eine verformbare Membran (34), die der Umgebung ausgesetzt ist, in der der zu messende Druck herrscht, wobei der Wandler (18, 20, 22) mechanisch verbunden ist mit der Membran, um die auf diese Membran (34) wirkende Kraft an den Resonator (16) zu übertragen, und das Gehäuse einen steifen Rahmen umfaßt, um die Gesamtheit der Bauteile des Wandlers und des Resonators festzuhalten.

2. Resonanzdruckfühler nach Anspruch 1, dadurch gekennzeichnet, daß der steife Rahmen (24) rechtwinklig ist und entsprechend seiner Längsachse die folgenden, den Wandler bildenden Bestandteile umfaßt:
- einen Dreh- bzw. Gelenkzapfen (22), drehbar um zwei Gelenke (26) angebracht, die ihn verbinden mit den Seitenwänden des Rahmens (24) und dessen Hauptrichtung senkrecht ist zur Längsachse des Rahmens;
- einen Ansatz (20), verbunden mit den Wänden des Rahmens durch ein System von Rippen (28), deren Ebene im wesentlichen senkrecht ist zur Ebene des Rahmens;
- einen nachgiebigen und biegsamen Träger (18), der den Ansatz (20) und den Zapfen (22) verbindet;
- einen als Resonator dienenden Träger (16), der die zum nachgiebigen und biegsamen Träger (18) entgegengesetzte Seite des Ansatzes (20) verbindet mit einer der Seiten des steifen Rahmens (24), die senkrecht ist zur Längsachse des Rahmens, und dadurch, daß der steife Rahmen (24) in der Mittelebene des Gehäuses (32) angebracht ist, das parallelflach ist, und von dem wenigstens eine der zu der Ebene des Rahmens parallelen Seiten gebildet wird durch die Membran (34), verformbar unter der Wirkung des Drucks, dem sie ausgesetzt ist, wobei die Verformungen dieser Membran (34) an den Zapfen übertragen werden durch einen zur Membran (34) gehörenden Vorsprung, der diese Membran und den Ansatz (22) mechanisch verbindet.

3. Herstellungsverfahren eines Resonanzdruckfühlers nach einem der vorangehenden Ansprüche 1 und 2 in miniaturisierter Form, dadurch gekennzeichnet, daß die Membran und der steife Rahmen, das Gehäuse bildend, getrennt hergestellt werden aus demselben Material, gewählt zwischen Quartz und Silicium, aus einem Monoblock-Substrat dieses Materials, geätzt mit Hilfe von Mikrobearbeitungsverfahren, dann anschließend zusammengesetzt.

## Claims

1. Resonant pressure transducer having a box (32) containing a converter and a resonator (16) vibrated by an exciter and whose resonant frequency, which is measured, is a function of the intensity of the force corresponding to the pressure to be determined, the box retaining all the components of the converter and the resonator, the converter having flexible and bending means (18) able to absorb the bending moments so as to transmit to the resonator a tensile or compressive force free from a stress-generating bending moment located at the resonator entrance is characterized in that the box (32) is sealed by a deformable membrane (34) subject to the ambient conditions where the pressure to be measured prevails, the converter (18, 20, 22) being mechanically connected to the membrane for transmitting the force withstood in this way by the membrane (34) to the resonator (16), the box having a rigid frame for retaining all the components of the converter and resonator.

2. Resonant pressure transducer according to claim 1, characterized in that the rigid frame (24) is rectangular and has, along its longitudinal axis, a pivot (22) mounted so as to rotate about two hinges (26) connecting it to the side walls of the frame (24) and whose general direction is perpendicular to the longitudinal axis of the frame, a shoulder (20) connected to the walls of the frame by a system of fins (28), whose plane is substantially perpendicular to the plane of the frame, a flexible, bending beam (18) connecting the shoulder (24) and the pivot (22) and a beam (16) serving as a resonator connecting the side of the shoulder (20) opposite to the flexible, bending beam (18) to one of the sides of the rigid frame (24) perpendicular to its longitudinal axis and in that the rigid frame (24) is fitted in the median plane of a parallelepipedic case (32) whereof at least one of the faces parallel to the plane of the frame is constituted by a diaphragm (34) deformable under the effect of the pressure to which it is exposed, the deformations of said diaphragm (34) being transmitted to the pivot by a stud integral with the diaphragm (34) and mechanically connecting said diaphragm to the pivot (22).

3. Process for the production of a pressure transducer according to either of the claims 1 and 2 in miniaturized form, characterized in that the case incorporating the diaphragm and the rigid frame are produced separately from the same material chosen from among quartz and silicon using a one-piece substrate of said material etched by micromachining processes and then assembled.
